# EUROPÄISCHE PATENTSCHRIFT

(11) **EP 0 620 395 B1**
(45) Veröffentlichungstag und Bekanntmachung des Hinweises auf die Patenterteilung: **03.01.1996**
(21) Anmeldenummer: 94810197.7
(22) Anmeldetag: 31.03.1994
(51) Int. Cl.: F16L 3/16, F16L 3/24

(54) **Tragvorrichtung**
Supporting device
Dispositif de support

(30) Priorität: 14.04.1993 DE 4311924
(43) Veröffentlichungstag der Anmeldung: 19.10.1994
(73) Patentinhaber: HILTI Aktiengesellschaft, FL-9494 Schaan (LI)
(72) Erfinder: Opitz, Michael, D-80638 München (DE); Neuerburg, Ralf, D-86899 Landsberg (DE)
(74) Vertreter: Wildi, Roland

(56) Entgegenhaltungen:
- DE-A- 1 942 009
- DE-U- 8 209 883
- US-A- 4 666 109

## Beschreibung

Die Erfindung betrifft eine Tragvorrichtung mit einem Führungselement, dessen Querschnitt im wesentlichen C-förmig ausgebildet ist und mit einem Gleitelement, das ein die lichte Weite zwischen den freien Enden des Führungselementes durchragendes Lastangriffsteil aufweist, wobei die freien Enden des Führungselmentes unter einem stumpfen Winkel zueinander verlaufen und das Gleitelement symmetrisch zum Lastangriffsteil angeordnete, die freien Enden des Führungselementes überlappende, unter einem stumpfen Winkel verlaufende Flanken aufweist.

Bei der Befestigung, insbesondere Abhängung von Bauteilen, wie Rohrleitungen und dgl., ist zu berücksichtigen, dass an bestimmten Befestigungsstellen Verlagerungen der Bauteile auftreten, die beispielsweise durch die wärmebedingte Ausdehnung zustandekommen. Sofem solchen Befestigungen dienende Tragvorrichtungen diesem Umstand nicht Rechnung tragen, kommt es zu Spannungen, die zu Verformungen und Beschädigungen der Bauteile führen.

Aus dem DE-GM 82 09 883 ist eine Tragvorrichtung für die Befestigung von Verkleidungsplatten an Bauwerken mit einem Führungselement und einem Gleitelement bekannt, wobei der Querschnitt des Führungselementes im wesentlichen C-förmig ausgebildet ist und das Gleitelement ein die lichte Weite zwischen den freien Enden des Führungselementes durchragendes Lastangriffsteil aufweist. Die freien Enden des Führungselementes verlaufen unter einem stumpfen Winkel zueinander. Das Gleitelement weist symmetrisch zum Lastangriffsteil angeordnete, unter einem stumpfen Winkel verlaufende Flanken auf, die mit Führungsbahnen für die freien Enden des Führungselementes versehen sind. Das Gleitelement kann gegenüber dem Führungselement verschoben und in einer Richtung verschwenkt werden.

Der Nachteil dieser bekannten Tragvorrichtung besteht darin, dass die Verschwenkbarkeit des Gleitelementes gegenüber dem Führungselement nur in einer Richtung möglich ist und die Führungsbahnen Auffangnischen für Schmutz bilden, so dass bei Verschmutzung die Verschwenkbarkeit beinträchtigt wird.

Der Erfindung liegt die Aufgabe zugrunde, eine einwandfrei funktionierende Tragvorrichtung zu schaffen, deren Gleitelement gegenüber dem Führungselement verschiebbar und in alle Richtungen verschwenkbar ist.

Erfindungsgemäss wird dies dadurch erreicht, dass die Flanken des Gleitelementes rotationssymmetrisch zum Lastangriffsteil angeordnet sind.

Ein rotationssymmetrisch ausgebildetes Gleitelement ist in der Lage, gegenüber dem Führungselement Schwenkbewegungen in allen Richtungen auszuführen. Dadurch kann die Tragvorrichtung Bewegungen der Bauteile, beispielsweise Rohrleitungen in Längsrichtung und quer zur Längsrichtung, aufnehmen.

Aus herstellungstechnischen und wirtschaftlichen Gründen ist das Gleitelement vorzugsweise als bombierte Scheibe ausgebildet.

Erfahrungsgemäss werden Bauteile und Tragvorrichtungen nach der Befestigung mit einer Farbe versehen. Dabei kann sich beispielsweise Farbe tropfenweise auf der Innenseite der freien Enden des Führungselementes ansammeln und dort austrocknen. Weiters ist es möglich, dass sich an der gleichen Stelle Schmutz ansammeln kann. Beim Verschieben des Gleitelementes kann das Gleitelement mit einem derart entstandenen Hindernis zusammentreffen. Damit dieses unter einer gegebenenfalls leichten seitlichen Versetzung des Gleitelementes innerhalb des Führungselementes unter Drehbewegung vom Gleitelement überrollt werden kann, ist vorzugsweise das Gleitelement drehbar mit dem Lastangriffsteil verbunden, da das Lastangriffsteil in der Regel in drehfester Verbindung mit einer beispielsweise abgehängten Rohrleitung steht.

Bei der Befestigung von Bauteilen kann es passieren, dass das Führungselement versetzt angeordnet ist, so dass das Gleitelement gegenüber dem Führungselement verschwenkt wird. Auftretende, vertikale Belastungen werden somit nicht direkt vertikal über das Gleitelement auf das Führungselement übertragen. Um jedoch eine vertikale Ausrichtung des Lastangriffsteiles auch dann erreichen zu können, wenn das Führungselement seitlich zum Bauteil versetzt angeordnet ist, ist das Gleitelement zweckmässigerweise schwenkbar mit dem Lastangriffsteil verbunden. Ist das Gleitelement gegenüber dem Lastangriffsteil verschwenkbar, so kann eine parallele Versetzung des Lastangriffsteiles erfolgen. Der beim Verschwenken des Gleitelementes gegenüber dem Führungselement entstehende Winkel wird durch die schwenkbare Verbindung zwischen Gleitelement und Lastangriffsteil ausgeglichen.

Damit mit der erfindungsgemässen Tragvorrichtung Bauteile, wie Rohrleitungen, auch an Böden montiert werden können, ist zweckmässigerweise im lichten Profilquerschnitt des Führungselementes ein Zwischenelement derart angeordnet, dass sich zwischen dem Zwischenelement und den freien Enden des Führungselementes ein Zwischenraum bildet, der eine Aufnahme der Flanken des Gleitelementes erlaubt. Die vom Bauteil ausgehende, über das Lastangriffsteil auf das Gleitelement wirkende vertikale Kraft wird von dem Zwischenelement aufgenommen und über das Führungselement auf den Boden übertragen.

Das Zwischenelement kann auch als Dämpfungselement ausgebildet sein, so dass irgendwelche vertikale Schwingungen der Rohrleitungen abgedämpft werden können. In einem solchen Falle eignet sich die Herstellung des Zwischenelementes aus einem elastischen Material.

Erstreckt sich beispielsweise das Lastangriffsteil vom Gleitelement abragend in das Innere des Führungselementes, so muss das ungehinderte, freie Verschwenken des Lastangriffsteiles zusammen mit dem Gleitelement möglich sein. Zu diesem Zweck weist das Führungselement einen entsprechenden Schwenkbereich und das Zwischenelement zweckmässigerweise eine Durchtrittsöffnung auf, deren lichte Weite grösser ist als die Aussenkontur des Lastangriffsteiles.

Die Erfindung wird anhand von Zeichnungen, die zwei Ausführungsbeispiele wiedergeben, näher erläutert. Es zeigen:
Fig. 1 eine erfindungsgemässe Tragvorrichtung mit Schellenkörper und Rohrleitung als Bauteil;
Fig. 2 die Tragvorrichtung gemäss Fig. 1;
Fig 3 die Tragvorrichtung gemäss Fig. 2, geschnitten längs der Linie III-III;
Fig. 4 eine weitere erfindungsgemässe Tragvorrichtung mit Schellenkörper; und Rohrleitung als Bauteil;
Fig. 5 die Tragvorrichtung gemäss Fig. 4;
Fig. 6 die Tragvorrichtung gemäss Fig. 5, geschnitten längs der Linie VI-VI.

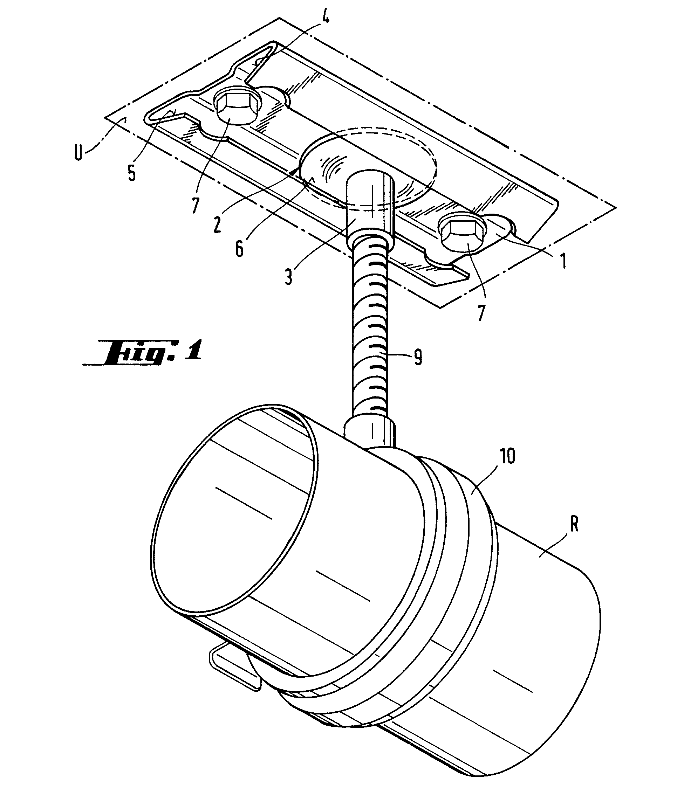

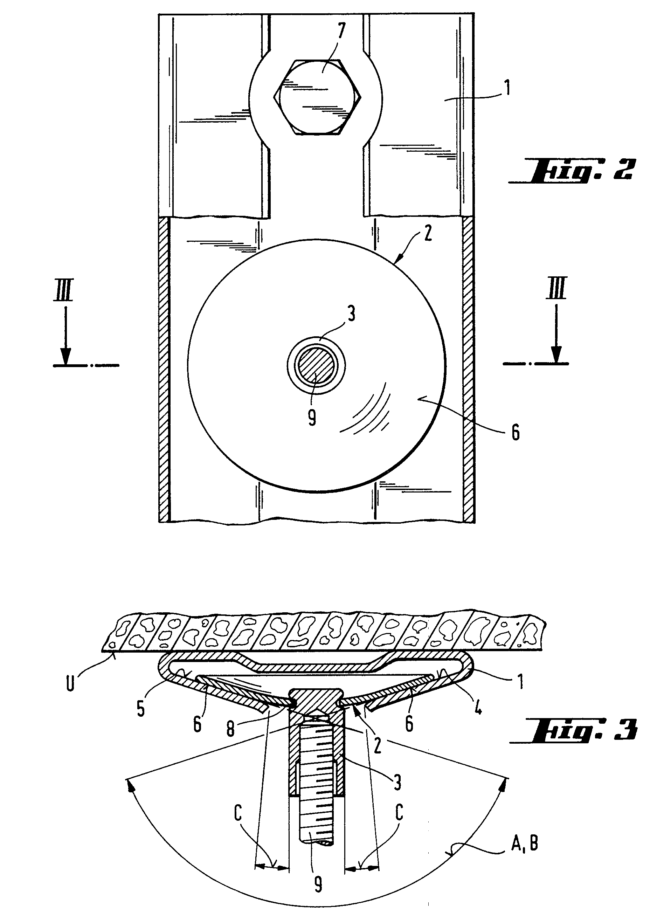

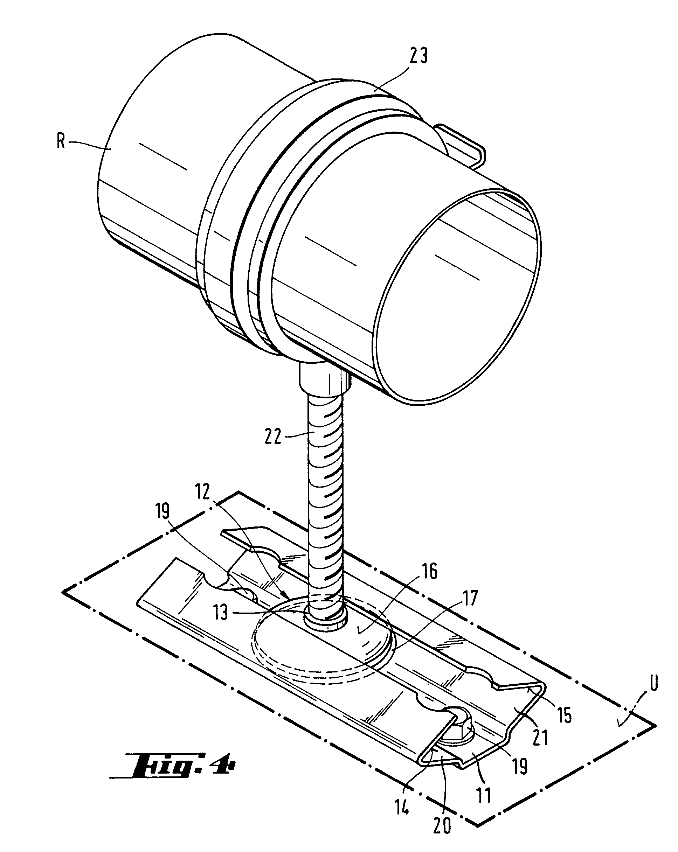

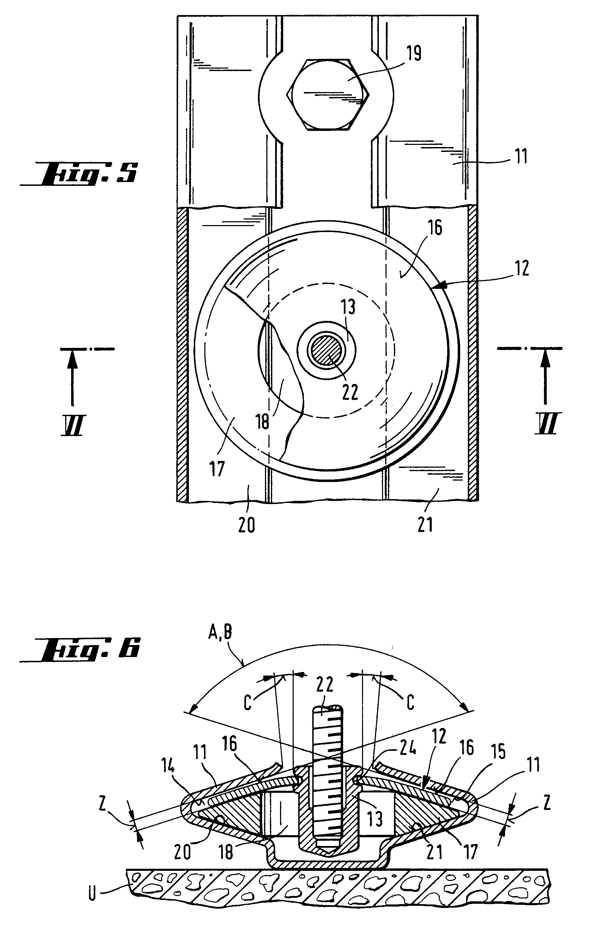

Die in Fig.1, 2, 3, 4, 5 und 6 dargestellten Tragvorrichtung bestehen aus einem Führungselement 1, 11, dessen Querschnitt im wesentlichen C-förmig ausgebildet ist. Die freien Enden 4, 5, 14, 15 der Führungselemente 1, 11 verlaufen unter einem stumpfen Winkel A zueinander und bilden Führungen für ein Gleitelement 2, 12. Das Gleitelement 2, 12 ist als bombierte Scheibe ausgebildet, ist gegenüber dem Führungselement in einer Richtung um 2° bis 12° verschwenkbar und besitzt ein die lichte Weite zwischen den freien Enden 4, 5, 14, 15 des Führungselementes 1, 11 durchragendes Lastangriffsteil 3, 13 auf. Das Gleitelement 2, 12 besitzt rotationssymmetrisch zum Lastangriffsteil 3, 13 angeordnete, die freien Enden 4, 5, 14, 15 des Führungselementes 1, 11 überlappende, unter einem stumpfen Winkel B verlaufende Flanken 6, 16.

Die Fig. 1 und 4 zeigen eine Tragvorrichtung in Verbindung mit einem Zwischenkörper 9, 22 und einem Schellenkörper 10, 23, der eine Rohrleitung R umgreift.

Die Führungselemente 1, 11 sind schienenförmig ausgebildet und besitzen jeweils wenigstens in den Endbereichen Befestigungspunkte 7, 19, über die die Führungselemente 1, 11 fest mit einem Untergrund U verbindbar sind. Die Befestigungspunkte 7, 19 sind derart ausgebildet, dass sie als axiale Anschlagsperre für die Gleitelemente 2, 12 dienen.

Das Lastangriffsteil 3, 13 ist drehbar mit dem Gleitelement 2, 12 verbunden. Das Lastangriffsteil 3, 13 weist zu diesem Zwecke eine umlaufend ausgebildete Nut 8, 24 auf, deren Durchmesser geringfügig kleiner ausgebildet ist, als der Durchmesser einer zentralen Durchtrittsöffnung des Gleitelementes 2, 12. Mittels einer entsprechenden Verpressung des Lastangriffsteiles 3, 13 entsteht eine unverlierbare Verbindung zwischen dem Gleitelement 2, 12 und dem Lastangriffsteil 3, 13.

Die Aussenkontur der umlaufenden Nut 8, 24 ist derart ausgebildet, dass ein Verschwenken des Lastangriffsteiles 3, 13 gegenüber dem Gleitelement 2, 12 erfolgen kann. Der Winkel C dieser Schwenkbewegung beträgt 1° bis 5°.

Das in Fig. 4, 5 und 6 dargestellte Führungselement 11 unterscheidet sich insofem gegenüber dem Führungselement 1 aus den Fig. 1, 2 und 3, als das Führungselement 11 ausser den als Führung für das Gleitlement 2, 12 dienenden freien Enden 14, 15 weitere, der Führung dienende Flächen 20, 21 aufweist, die den freien Enden 14, 15 symmetrisch gegenüberliegen. Eine Tragvorrichtung mit einem derart ausgebildeten

Führungselement 11 kann - wie das in den Fig. 4, 5 und 6 dargestellte Beispiel zeigt - für die stehende Montage von Rohrleitungen R verwendet werden, die in einer gewissen Höhe parallel zu einer im wesentlichen horizontalen Ebene eines Untergrundes U verlegt werden. Dabei wird in den lichten Profilquerschnitt des Führungselementes 11 ein Zwischenelement 17 eingelegt, das formstabil ausgebildet und derart ausgestaltet ist, dass sich zwischen dem Zwischenelement 17und den freien Enden 14, 15 des Führungselementes 11 ein Zwischenraum Z bildet, der ein ungehindertes Verschwenken des Gleitelementes 12 ermöglicht. Auftretende Kräfte, die über das Lastangriffsteil 13 auf das Gleitelement 12 übertragen werden, greifen an dem Zwischenelement 17 an, das seinerseits wiederum die Kraft über das Führungselement 11 auf den Untergrund U überträgt.

Bei der Verwendung des Führungselementes 11 kann ein Zwischenelement 17 in den lichten Profilquerschnitt des Führungselementes 11 eingesetzt werden, das elastisch ausgebildet ist und gewisse Dämpfungseigenschaften besitzt. Insbesondere Rohrleitungen neigen, abhängig von der Umgebungstemperatur, von der Temperatur des zu transportierenden Mediums und von der Belastung, dazu, Schwingungen zu erzeugen, die sich unter Umständen lautstark und schädlich auswirken können. Durch die Anordnung dämpfender Zwischenelemente 17 werden derartige Schwingungen gedämpft.

## Patentansprüche

1. Tragvorrichtung mit einem Führungselement (1, 11), dessen Querschnitt im wesentlichen C-förmig ausgebildet ist und mit einem Gleitelement (2, 12), das ein die lichte Weite zwischen den freien Enden (4, 5, 14, 15) des Führungselementes (1, 11) durchragendes Lastangriffsteil (3, 13) aufweist, wobei die freien Enden (4, 5, 14, 15) des Führungselementes (1, 11) unter einem stumpfen Winkel (A) zueinander verlaufen und das Gleitelement (2, 12) symmetrisch zum Lastangriffsteil (3, 13) angeordnete, die freien Enden (4, 5, 14, 15) des Führungselementes (1, 11) überlappende, unter einem stumpfen Winkel (B) verlaufende Flanken (6, 16) aufweist, dadurch gekennzeichnet, dass die Flanken (6, 16) des Gleitelementes (2, 12) rotationssymmetrisch zum Lastangriffsteil (3, 13) angeordnet sind.

2. Tragvorrichtung nach Anspruch 1, dadurch gekennzeichnet, dass das Gleitelement (2, 12) als bombierte Scheibe ausgebildet ist.

3. Tragvorrichtung nach Anspruch 1 oder 2, dadurch gekennzeichnet, dass das Gleitelement (2, 12) drehbar mit dem Lastangriffsteil (3, 13) verbunden ist.

4. Tragvorrichtung nach einem der Ansprüche 1 bis 3, dadurch gekennzeichnet, dass das Gleitelement (2, 12) schwenkbar mit dem Lastangriffsteil (3, 13) verbunden ist.

5. Tragvorrichtung nach einem der Ansprüche 1 bis 4, dadurch gekennzeichnet, dass im lichten Profilquerschnitt des Führungselementes (1, 11) ein Zwischenelement (17) derart angeordnet ist, dass sich zwischen dem Zwischenelement (17) und den freien Enden (14, 15) des Führungselementes (11) ein Zwischenraum (Z) bildet, der eine Aufnahme der Flanken (16) des Gleitelementes (12) erlaubt.

6. Tragvorrichtung nach Anspruch 5, dadurch gekennzeichnet, dass das Zwischenelement (17) eine Durchtrittsöffnung (18) aufweist, deren lichte Weite grösser ist als die Aussenkontur des Lastangriffsteiles (13).

## Claims

1. A supporting device having a guidance element (1, 11), the cross-section of which is substantially of C-shaped construction, and having a sliding element (2, 12) which comprises a load application part (3, 13) which protrudes through the clearance between the free ends (4, 5, 14, 15) of the guidance element (1, 11), wherein the free ends (4, 5, 14, 15) of the guidance element (1, 11) run at an obtuse angle (A) to each other and the sliding element (2, 12) has flanks (6, 16) which are disposed symmetrically with respect to the load application part (3, 13), which overlap the free ends (4, 5, 14, 15) of the guidance element (1, 11) and which run at an obtuse angle (B), characterised in that the flanks (6, 16) of the guidance element (2, 12) are disposed with rotational symmetry with respect to the load application part (3, 13).

2. A supporting device according to claim 1, characterised in that the sliding element (2, 12) is constructed as a bowed disc.

3. A supporting device according to claim 1 or 2, characterised in that the sliding element (2, 12) is rotatably attached to the load application part (3, 13).

4. A supporting device according to any one of claims 1 to 3, characterised in that the sliding element (2, 12) is attached swivel-mounted to the load application part (3, 13).

5. A supporting device according to any one of claims 1 to 4, characterised in that an intermediate element (17) is disposed in the clear sectional cross-section of the guidance element (1, 11), and that an intermediate space (Z) which allows the flanks (16) of the sliding element (12) to be received is formed between the intermediate element (17) and the free ends (14, 15) of the guidance element (11).

6. A supporting device according to claim 5, characterised in that the intermediate element (17) has a passageway opening (18), the clear width of which is larger than the external contour of the load application part (13).

## Revendications

1. Dispositif de support comprenant un élément de guidage (1, 11), de section transversale sensiblement en forme de C et un élément de glissement (2, 12), qui présente une partie d'application de charge (3, 13) traversant la portée libre entre les extrémités libres (4, 5, 14, 15) de l'élément de guidage (1, 11), les extrémités libres (4, 5, 14, 15) de l'élément de guidage (1, 11) faisant entre elles un angle obtus (A) et l'élément de glissement (2, 12) présentant, disposés symétriquement par rapport à la partie d'application de charge (3, 13), des flancs (6, 16) chevauchant les extrémités libres (4, 5, 14, 15) de l'élément de guidage (1, 11), s'étendant selon un angle obtus (B), caractérisé en ce que les flancs (6, 16) de l'élément de glissement (2, 12) sont disposés à symétrie de rotation par rapport à la partie d'application de charge (3, 13).

2. Dispositif de support selon la revendication 1, caractérisé en ce que l'élément de glissement (2, 12) est réalisé sous la forme d'un disque bombé.

3. Dispositif de support selon la revendication 1 ou 2, caractérisé en ce que l'élément de glissement (2, 12) est relié à rotation avec la partie d'application de charge (3, 13).

4. Dispositif de support selon l'une des revendications 1 à 3, caractérisé en ce que l'élément de glissement (2, 12) est relié à pivotement à la partie d'application de charge (3, 13).

5. Dispositif de support selon l'une des revendications 1 à 4, caractérisé en ce que dans la section de profil libre de l'élément de guidage (1, 11) est disposé un élément intermédiaire (17), de telle sorte qu'il se forme entre l'élément intermédiaire (17) et les extrémités libres (14, 15) de l'élément de guidage (11) une chambre intermédiaire (Z) permettant une réception des flancs (16) de l'élément de glissement (12).

6. Dispositif de support selon la revendication 5, caractérisé en ce que l'élément intermédiaire (17) présente une ouverture traversante (18), dont la portée libre est supérieure au contour extérieur de la partie d'application de charge (13).
